# EUROPÄISCHE PATENTSCHRIFT

(11) **EP 4 102 036 B1**
(45) Veröffentlichungstag und Bekanntmachung des Hinweises auf die Patenterteilung: **05.06.2024**
(21) Anmeldenummer: 22177575.2
(22) Anmeldetag: 07.06.2022
(51) Int. Cl.: F01N 9/00, B60W 20/16, F01N 3/20

(54) **VERFAHREN ZUR AUFHEIZUNG EINES ELEKTRISCH BEHEIZBAREN KATALYSATORS IM LEERLAUF**
METHOD FOR HEATING AN ELECTRICALLY HEATED CATALYST AT IDLE
PROCÉDÉ DE CHAUFFAGE D'UN CATALYSEUR POUVANT ÊTRE CHAUFFÉ ÉLECTRIQUEMENT LORS DE LA MARCHE À VIDE

(30) Priorität: 10.06.2021 DE 102021115045
(43) Veröffentlichungstag der Anmeldung: 14.12.2022
(73) Patentinhaber: VOLKSWAGEN AG, 38440 Wolfsburg (DE)
(72) Erfinder: Blei, Ingo, 38110 Braunschweig (DE); Alberti, Peter, 38553 Wasbüttel (DE); Kellner, Stephan, 38440 Wolfsburg (DE)
(74) Vertreter: Gulde & Partner

(56) Entgegenhaltungen:
- WO-A1-2020/192973
- DE-A1-102019 127 720
- JP-A- H10 252 453
- US-A- 5 966 931
- US-B2- 7 240 481

## Beschreibung

Die Erfindung betrifft ein Verfahren zur Aufheizung eines elektrisch beheizbaren Katalysators im Leerlauf.

Die aktuelle und eine zukünftig immer schärfer werdende Abgasgesetzgebung stellen hohe Anforderungen an die motorischen Rohemissionen und die Abgasnachbehandlung von Verbrennungsmotoren. Dabei stellen die Forderungen nach einem weiter sinkenden Verbrauch und die weitere Verschärfung der Abgasnormen hinsichtlich der zulässigen StickoxidEmissionen eine Herausforderung für die Motorenentwickler dar. Bei Ottomotoren erfolgt die Abgasreinigung in bekannter Weise über einen Drei-Wege-Katalysator, sowie über dem Drei-Wege-Katalysator vor- und nachgeschaltete weitere Katalysatoren. Bei Dieselmotoren finden aktuell Abgasnachbehandlungssysteme Verwendung, welche einen Oxidationskatalysator oder einen NOx-Speicherkatalysator, einen Katalysator zur selektiven katalytischen Reduktion von Stickoxiden (SCR-Katalysator) sowie einen Partikelfilter zur Abscheidung von Rußpartikeln und gegebenenfalls weitere Katalysatoren aufweisen. Als Reduktionsmittel wird dabei bevorzugt Ammoniak verwendet.

Die oben genannten Anforderungen zukünftiger Abgasemissionsgesetzgebung hinsichtlich der Erfüllung bestimmter Emissionsgrenzwerte unter realen Umweltbedingungen bei geringen oder keinen Restriktionen der Fahrweise eines Pkw auf kurzen Wegstrecken machen es erforderlich, dass die vorhandene Abgasnachbehandlung sehr schnell nach Fahrtbeginn besser noch vor Fahrtbeginn einsatzfähig ist. Im Falle von hybridischen Antrieben sollte die Abgasnachbehandlung vor motorischem Fahrtbeginn einsatzfähig sein. Betriebszustände, die zum Aufheizen der Abgasanlage nach Fahrtbeginn, angewendet werden, sind aus dem Stand der Technik grundsätzlich bekannt.

Aus der US 9,975,543 B1 ist ein bremsaktiviertes Heizsystem bekannt.

US 7,981,174 B2 beschreibt beheizbare Abgasbehandlungssysteme.

US 6,003,304 A beschreibt ebenfalls beheizbare Abgasbehandlungssysteme.

Nachteilig an den aus dem Stand der Technik bekannten Lösungen ist jedoch, dass die Abgasanlage insbesondere kurz nach Fahrtbeginn noch nicht ausreichend betriebsbereit ist und die Abgasemissionen nicht wirksam reduziert werden können. Als weitere Druckschriften werden US 3 877 976 A, WO2020192972A1, JPH10252435A und GB 1 397 528 A genannt.

Der Erfindung liegt daher nun die Aufgabe zugrunde, die Abgasemissionen bereits kurz nach Fahrtbeginn wirksam zu reduzieren.

Zur Lösung dieser Aufgabe wird ein Verfahren zur Aufheizung eines elektrisch beheizbaren Katalysators zur Abgasnachbehandlung eines Verbrennungsmotors, der mit seinem Auslass mit einer Abgasanlage verbunden ist, vorgeschlagen, wobei der elektrisch beheizbare Katalysator in der Abgasanlage angeordnet ist. Das Verfahren umfasst die folgenden Schritte:
- elektrisches Aufheizen des elektrisch beheizbaren Katalysators und
- Drehzahlerhöhung des Verbrennungsmotors auf wenigstens 1000 min⁻¹;
wobei die Schritte des Verfahrens bei Leerlauf des Verbrennungsmotors durchgeführt werden. Während der Verfahrensschritte ist ferner eine Abfahrtsbeschränkung eines durch den Verbrennungsmotor angetriebenen Kraftfahrzeugs aktiviert, wobei die Abfahrtsbeschränkung dem Fahrer optisch angezeigt wird.

Leerlauf im Sinne der Erfindung bezeichnet den Betrieb des Verbrennungsmotors, ohne dass dieser nutzbare Arbeit, d.h. Antriebsarbeit, verrichtet. Im Leerlaufbetrieb wird dem Verbrennungsmotor so viel Kraftstoff zugeführt, dass innere Reibungskräfte und dergleichen überwunden und eine vorbestimmte Leerlaufdrehzahl eingestellt werden ohne, dass das erzeugte Drehmoment auf die Antriebsräder übertragen wird. Die Trennung des Verbrennungsmotors vom Antriebstrakt erfolgt üblicherweise durch Öffnen der Kupplung. Auch während der Fahrt, also nach Fahrbeginn, kann sich das Fahrzeug im (motorischen) Leerlauf befinden, insbesondere bei Fahrzeugstillstand.

Der Kern der Erfindung besteht in der besonderen Kombination der angeführten Verfahrensschritte, die es ermöglicht, die Abgasnachbehandlung des Verbrennungsmotors vor dem Fahrtbeginn wenn nicht vollständig, aber zumindest dahingehend bereitzustellen, dass die anfallenden Rohemissionen wirkungsvoll reduziert werden können.

Die Energie, die zum Betrieb des EHC notwendig ist, wird bevorzugt direkt über den Generator vom Verbrennungsmotor zur Verfügung gestellt. Dies führt zu einer signifikanten Lasterhöhung und damit zu einem höheren Energieeintrag in die Abgasnachbehandlung. Zusätzlich zur Lasterhöhung wird gleichzeitig die Drehzahl des Verbrennungsmotors deutlich erhöht. Die Erfindung beruht auf der Erkenntnis, dass insbesondere durch die Kombination der motorischen Drehzahlerhöhung über den genannten Grenzwert und der elektrischen Heizung über den Generator, der Katalysator im Leerlauf und/oder vor Fahrbeginn in einen hinreichend aktivierten Betriebszustand überführt werden kann.

Der elektrisch beheizbare Katalysator ist bevorzugt als erste Komponente der Abgasnachbehandlung eingesetzt. Insbesondere handelt es sich um einen Oxidationskatalysator, welcher stromaufwärts weiterer Komponenten der Abgasnachbehandlungsanlage angeordnet ist.

Gemäß einer bevorzugten Ausführungsform wird das Verfahren beschrieben, wobei das Aufheizen des elektrisch beheizbaren Katalysators mit einer Leistung von wenigstens 4 kW (Kilowatt) stattfindet, bevorzugt mit einer Leistung von wenigstens 6 kW.

Dadurch, dass das Aufheizen des elektrisch beheizbaren Katalysators mit einer Leistung von wenigstens 4 kW stattfindet, bevorzugt mit einer Leistung von wenigstens 6 kW, kann noch vor (verbrennungsmotorischem) Fahrtbeginn der Katalysator aufgeheizt werden, und damit die Reduktion der Abgasschadstoffe bereits kurz nach Fahrbeginn wirkungsvoll erreicht werden. Das Aufheizen des Katalysators erfolgt dabei direkt über den Generator vom Verbrennungsmotor.

Gemäß einer bevorzugten Ausführungsform findet die Drehzahlerhöhung auf wenigstens 1200 min⁻¹ statt, vorzugsweise auf maximal 1500 min⁻¹.

Durch die Steigerung der Drehzahl auf 1000 Umdrehungen pro Minute (min⁻¹) bis 1500 min⁻¹, bevorzugt 1200 min⁻¹ bis 1500 min⁻¹, kann der Katalysator noch vor Fahrtbeginn hinreichend aufgeheizt werden, um die Rohemissionen zunächst auf einem geringen Niveau zu halten. Nach Fahrtbeginn, wenn höhere Drehzahlbereiche erreicht werden, ist daher die Abgasanlage bereits ausreichend aufgeheizt, um die höheren Schadstoffemissionen im Fahrtbetrieb wirkungsvoll zu reduzieren.

Insbesondere hat sich die Kombination einer Leistung von wenigstens 6 kW zur Aufheizung des EHCs und eine Drehzahlerhöhung auf 1200 min⁻¹ bis 1500 min⁻¹, als besonders bevorzugt gezeigt. Diese Zahlenwerte stellen daher eine bevorzugte Kombination dar, da hierdurch einerseits die Abgasemissionen vor Aufheizen des Katalysators im Leerlauf gering gehalten werden, anderseits eine ausreichende Aufheizung des Abgasnachbehandlungssystems dahingehend erfolgt, dass auch nach Fahrtbeginn die Abgasemissionen wirksam durch die Abgasnachbehandlungsanlage reduziert werden können.

Erfindungsgemäß ist während der Verfahrensschritte eine Abfahrtbeschränkung aktiviert. Hierdurch wird sichergestellt, dass der Katalysator auf die gewünschte Temperatur aufgeheizt ist, um eine hinreichende Reduzierung der Abgasemissionen zu bewirken.

Erfindungsgemäß wird die Abfahrtsbeschränkung dem Fahrer optisch angezeigt. Auf diese Weise wird eine Irritation des Fahrers vermieden.

Gemäß einer bevorzugten Ausführungsform wird die Phase der Aufheizung durch weitere begleitende Maßnahmen unterstützt werden. Dazu gehört eine Verstellung des Motormanagements zur maximalen Reduzierung der Stickoxidemissionen bei gleichzeitig maximaler Abgastemperatur am Auslassventil. Dadurch wird der Aufheizvorgang weiter beschleunigt und die entstehenden Stickoxidemissionen bei noch nicht vollständig aktiver Stickoxidnachbehandlung minimiert.

Während dieser Phase der Aufheizung wird also die verbrennungsmotorische Abfahrt des Fahrzeugs unterbunden, um möglichst stabile Bedingungen für die Aufheizung selbst aber auch für den Verbrennungsmotor zu erzielen und eine Überforderung der Abgasnachbehandlungsanlage während dieser Zeit zu verhindern. Die Beschränkung bleibt bevorzugt solange bestehen bis ein bestimmter Umsetzungsgrad beispielsweise eines ersten SCR-Bausteins erreicht wird.

Die Betriebsstrategie kann noch durch weitere begleitende Maßnahmen der Rohemissionsminderung der höheren Abgastemperaturen ergänzt werden.

Gemäß einem weiteren Aspekt wird ein Kraftfahrzeug beschrieben, wobei das Kraftfahrzeug einen Verbrennungsmotor und eine Abgasanlage umfasst, der mit seinem Auslass mit der Abgasanlage verbunden ist, wobei in der Abgasanlage stromabwärts ein elektrisch beheizbarer Katalysator angeordnet ist, wobei die Abgasanlage dazu ausgebildet ist das Verfahren gemäß einem der vorhergehenden Ansprüche auszuführen.

Bevorzugt ist der erste SCR-Katalysator oder Partikelfilter mit einer Beschichtung ein motornaher SCR-Katalysator oder Partikelfilter, wobei der Partikelfilter beziehungsweise der SCR-Katalysator einen Einlass aufweist, der mit einer Abgaslauflänge von maximal 80 cm, vorzugsweise maximal 50 cm, von dem Auslass des Verbrennungsmotors beanstandet ist.

Der motornahe Partikelfilter mit SCR-Beschichtung kann gemäß einer Ausführungsform, wie der elektrisch beheizbare Oxidationskatalysator, im Leerlauf, insbesondere vor Fahrbeginn, auf seine Betriebstemperatur aufgeheizt werden und somit auch unmittelbar nach Fahrtbeginn für eine effiziente Konvertierung der Stickoxidemissionen genutzt werden. Bei hohen Motorlasten und Temperaturen sinkt die Ammoniak Speicherfähigkeit. Hiervon ist insbesondere der erste SCR-Katalysator betroffen, da dieser bevorzugt motornah angeordnet ist und somit bei hohen Motorlasten schnell aufheizt, sodass die Ammoniakspeicherfähigkeit sinkt. Wenn es bedingt durch eine Beschleunigung zu einem hohen Temperaturgradienten kommt, schlupft das Ammoniak, welches als Füllstand auf dem erstem SCR-Katalysator vorliegt, "nach unten" auf den zweiten SCR-Katalysator. Dies führt zu einem erhöhtem Füllstand des zweiten Katalysators. Insbesondere bei hohen Temperaturen kann kaum noch Ammoniak im ersten SCR-Katalysator gespeichert werden. Es kommt damit zu einem überhöhten Ammoniak Füllstand im zweiten Katalysator. Sobald dieser überladen ist und das Ammoniak nicht mehr gespeichert werden kann, kommt es zu Ammoniak-Durchbrüchen ("Tailpipe"-Emissionen), welche begrenzt werden müssen. Um die Limitierung der Ammoniak Emission einhalten zu können beziehungsweise die Emittierung gänzlich zu vermeiden, ist es notwendig, den Füllstand des zweiten Katalysators so schnell wie möglich abzubauen. Die bisherige Strategie, die lediglich die Reduktionsmitteldosierung vermindert, stellt sich als unzureichend dar.

Insbesondere dauert diese Strategie insbesondere bei hochtourigen Fahrsituationen zu lange, um den Ammoniak Schlupf am zweiten SCR-Katalysator zu verhindern. Das erfindungsgemäße Verfahren erreicht eine Verminderung der Ammoniak Füllmenge deshalb durch ein Anpassen der Betriebsstrategie des Verbrennungsmotors, dahingehend, dass die Menge an NOx im Abgas des Verbrennungsmotors erhöht wird. Der elektrisch beheizbare Oxidationskatalysator und der beheizbare motornahe Partikelfilter mit SCR-Beschichtung wirken somit vorteilhaft zusammen um eine Reduktion der Abgase zu bewirken.

Ferner wird gemäß einer bevorzugten Ausführungsform ein Verfahren zur Abgasnachbehandlung eines Verbrennungsmotors beschrieben, wobei das Anpassen der Betriebsstrategie des Verbrennungsmotors dadurch erfolgt, dass die mittels eines Abgasrückführungssystems zum Verbrennungsmotor zurückgeführte Menge an Abgas angepasst wird, bevorzugt vermindert wird.

Bei der Abgasrückführung wird, um die Temperatur bei der Verbrennung im Motor zu senken, der eingesetzten Luft, Abgas zugemischt. Dabei sinkt die Sauerstoffkonzentration und steigt die Wärmekapazität des Gemisches, was bei der Verbrennung des Kraftstoffes zu einer geringeren Temperaturerhöhung im Brennraum führt. Dadurch sinkt wiederum die Verbrennungstemperatur, weshalb sich weniger Stickoxide bilden. Durch eine Verminderung der Menge an zurückgeführtem Abgas durch das Abgasrückführungssystem im Sinne des erfindungsgemäßen Verfahrens, steigt umkehrt die Sauerstoffkonzentration und sinkt die Wärmekapazität des Gemisches, was bei der Verbrennung des Kraftstoffes zu einer stärkeren Temperaturerhöhung im Brennraum führt. Dadurch steigt wiederum die Verbrennungstemperatur, weshalb sich mehr Stickoxide bilden. Das Abgas, welches den ersten SCR Katalysator und insbesondere den zweiten SCR Katalysator erreicht, ist damit stärker mit Stickoxiden angereichert. Die erhöhte Menge an Stickoxiden im Abgas führt zu einer schnellen Konvertierung des überschüssigen Ammoniaks und kann somit effizient einen Ammoniakschlupf beenden beziehungsweise vermeiden, dass ein Ammoniakschlupf überhaupt auftritt.

Ferner wird gemäß einer weiter bevorzugten Ausführungsform ein Verfahren zur Abgasnachbehandlung eines Verbrennungsmotors beschrieben, wobei das Abgasrückführungssystem als Niederdruck-Abgasrückführungssystem ausgebildet ist, welches stromabwärts des ersten SCR-Katalysators oder Partikelfilters mit einer Beschichtung und stromaufwärts des zweiten SCR-Katalysators Abgas abzweigt und zum Verbrennungsmotor zurückführt, wobei das Anpassen der Betriebsstrategie des Verbrennungsmotors, dadurch erfolgt, dass die Menge an Abgas, welche stromabwärts des ersten SCR-Katalysators oder Partikelfilters mit einer Beschichtung und stromaufwärts des zweiten SCR-Katalysators abzweigt wird, in Abhängigkeit vom Ammoniak Füllstand des zweiten SCR-Katalysators angepasst wird.

Ferner wird gemäß einer bevorzugten Ausführungsform ein Verfahren zur Abgasnachbehandlung eines Verbrennungsmotors beschrieben, wobei das Anpassen der Betriebsstrategie in Abhängigkeit von der Temperatur des Abgases erfolgt. Dadurch, dass das Anpassen der Betriebsstrategie in Abhängigkeit von der Temperatur erfolgt, kann ein Ausgleich zwischen kurzfristig erhöhter NOx Emission und Verminderung von Ammoniakemissionen erreicht werden.

Ferner wird gemäß einer bevorzugten Ausführungsform ein Verfahren zur Abgasnachbehandlung eines Verbrennungsmotors beschrieben, wobei die Anpassung der Betriebsstrategie erst bei Überschreiten eines definierten Grenzwertes der Temperatur erfolgt. Der Grenzwert der Temperatur wird dabei so festgelegt, dass es erst bei Überschreiten des Grenzwertes zu einer erheblichen Überladung mit Ammoniak kommt und eine erhebliche Emission von Ammoniak droht. Es wird damit verhindert, dass es unnötigerweise zu einer Erhöhung der Stickoxidmenge im Abgas und damit zu einer erhöhten Emission von Stickoxiden kommt, obwohl keine Überladung mit Ammoniak vorliegt.

Ferner wird gemäß einer bevorzugten Ausführungsform ein Verfahren zur Abgasnachbehandlung eines Verbrennungsmotors beschrieben, wobei das Anpassen der Betriebsstrategie in Abhängigkeit von der Reduktionsmittel-Dosierstrategie erfolgt. Hierdurch ist vorteilhaft möglich, dass sowohl die Reduktionsmittel Dosierstrategie, die dazu dient, die eindosierte Menge an Ammoniak an den Füllstand des ersten SCR-Katalysators beziehungsweise des zweiten SCR-Katalysators anzupassen, als auch die Betriebsstrategie des Verbrennungsmotors aufeinander abgestimmt werden. Hierdurch lässt sich eine besonders effiziente Verminderung des Füllstandes am zweiten SCR Katalysators erreichen.

Ferner wird gemäß einer bevorzugten Ausführungsform ein Verfahren zur Abgasnachbehandlung eines Verbrennungsmotors beschrieben, wobei die Anpassung der Betriebsstrategie in Abhängigkeit von der Fahrsituation erfolgt. Dadurch, dass das Anpassen der Betriebsstrategie in Abhängigkeit von der Fahrsituation erfolgt, kann ein Ausgleich zwischen kurzfristig erhöhter NOx Emission und Verminderung von Ammoniakemissionen erreicht werden.

Ferner wird gemäß einer bevorzugten Ausführungsform ein Verfahren zur Abgasnachbehandlung eines Verbrennungsmotors beschrieben, wobei das Anpassen der Betriebsstrategie in Abhängigkeit von der geschlupften Ammoniak Menge erfolgt.

Gemäß einem weiteren Aspekt der Erfindung wird eine Abgasanlage für einen Verbrennungsmotor beschrieben, wobei der Verbrennungsmotor mit seinem Auslass mit der Abgasanlage verbunden werden kann, und wobei in der Abgasanlage stromabwärts einer Turbine eines Abgasturboladers ein erster SCR-Katalysator oder Partikelfilter mit einer Beschichtung zur selektiven katalytischen Reduktion von Stickoxiden angeordnet ist, und wobei stromabwärts des ersten SCR-Katalysators ein zweiter SCR Katalysator angeordnet ist dadurch gekennzeichnet, dass die Abgasanlage dazu ausgebildet ist, ein Verfahren nach einem der vorhergehenden Ansprüche durchzuführen.

Ferner wird gemäß einer bevorzugten Ausführungsform eine Abgasanlage für einen Verbrennungsmotor beschrieben, wobei der erste SCR-Katalysator oder Partikelfilter mit einer Beschichtung ein motornaher SCR-Katalysator oder Partikelfilter ist. Dabei weist der Partikelfilter beziehungsweise der SCR-Katalysator einen Einlass auf, der mit einer Abgaslauflänge von maximal 80 cm, vorzugsweise maximal 50 cm, von dem Auslass des Verbrennungsmotors beabstandet ist.

Ferner wird gemäß einer bevorzugten Ausführungsform eine Abgasanlage für einen Verbrennungsmotor beschrieben, wobei der zweite SCR-Katalysator ein Unterbodenkatalysator ist, der nahe der Unterseite des Fahrzeugs angeordnet ist.

Im Zusammenhang mit der vorliegenden Erfindung liegt ein erster beziehungsweise ein zweiter Katalysator vor, der eine selektive katalytische Reduktion von Stickoxiden zu Ammoniak ermöglicht. Dieser kann insbesondere entweder ein "reiner" SCR Katalysator sein und/oder ein SCR-beschichteter Partikelfilter. Sofern im Zusammenhang mit der vorliegenden Erfindung von einem ersten (beschichteten) Partikelfilter die Rede ist, so ist, sofern nicht ausdrücklich etwas anderes beschrieben ist, davon auszugehen, dass zusätzlich oder alternativ auch ein erster "reiner" SCR Katalysator eingesetzt werden kann, also ein SCR-Katalysator ohne Partikelfilter.

Der erste SCR-beschichtete Partikelfilter beziehungsweise der erste SCR-Katalysator ist bevorzugt ein motornaher Partikelfilter beziehungsweise ein motornaher SCR-Katalysator. Unter einem motornahen Partikelfilter ist in diesem Zusammenhang ein Partikelfilter beziehungsweise ein SCR-Katalysator zu verstehen, dessen Einlass mit einer Abgaslauflänge von maximal 80 cm, vorzugsweise maximal 50 cm, von dem Auslass des Verbrennungsmotors beabstandet ist.

Der zweite SCR-beschichtete Partikelfilter beziehungsweise der zweite SCR-Katalysator ist bevorzugt ein motorferner Partikelfilter. Unter einem motorfernen SCR Katalysator ist bevorzugt ein SCR Katalysator zu verstehen, welcher stromab des ersten SCR Katalysators angeordnet ist.

Um eine vollständige Stickoxid Umwandlung zu ermöglichen, ist erfindungsgemäß also ein weiterer SCR Katalysator, also ein zweiter SRC Katalysator, vorgesehen. Dieser ermöglicht trotz eines Wirkungsgrades von kleiner 1 des ersten SCR Katalysators eine im Wesentlichen vollständige Umsetzung der Stickoxide.

Bevorzugt ist ein NOx Sensor stromab des zweiten SCR Katalysators angeordnet. Dieser dient vorteilhaft dazu, die Ammoniak-Konzentration stromabwärts des zweiten SCR Katalysators zu bestimmen. Somit kann für den zweiten Katalysator festgestellt werden, ob ein Ammoniak-Schlupf auftritt.

Um eine vollständige Stickoxid Umwandlung zu ermöglichen, ist wie bereits beschrieben, erfindungsgemäß also ein weiterer SCR Katalysator vorgesehen. Dieser ermöglicht trotz eines Wirkungsgrades von kleiner 1 des ersten SCR Katalysators eine im Wesentlichen vollständige Umsetzung der Stickoxide. Ein dritter NOx Sensor stromab des zweiten SCR-Katalysators dient vorteilhaft dazu, die Ammoniak-Konzentration stromabwärts des zweiten Katalysators zu bestimmen. Somit kann für den zweiten Katalysator besser festgestellt werden, ob ein Ammoniak-Schlupf auftritt.

In einer weiteren Ausführungsform des Abgasnachbehandlungssystems ist vorgesehen, dass stromabwärts des Partikelfilters und stromaufwärts des zweiten SCR-Katalysators eine Niederdruck-Abgasrückführung aus dem Abgaskanal abzweigt. Durch den Partikelfilter können Rußpartikel und sonstige Feststoffpartikel aus dem Abgasstrom herausgefiltert werden, sodass diese nicht über die Niederdruck-Abgasrückführung in das Luftversorgungssystem zurückgeführt werden und dort zu Beschädigungen, insbesondere zu Beschädigungen an dem Verdichter des Abgasturboladers führen können. Zudem können durch eine Abgasrückführung über die Niederdruck-Abgasrückführung in bekannter Weise die Rohemissionen des Verbrennungsmotors minimiert werden, wodurch der Reduktionsmitteleinsatz in der Abgasnachbehandlung ebenfalls reduziert werden kann.

Gemäß einer bevorzugten Ausführungsvariante des Abgasnachbehandlungssystems ist vorgesehen, dass stromabwärts des Partikelfilters und stromaufwärts des zweiten SCR-Katalysators ein zweites Dosierelement angeordnet ist. Durch ein zweites Dosierelement kann der Betriebsbereich des Abgasnachbehandlungssystems erweitert werden. Somit ist es insbesondere bei hohen Abgastemperaturen am Partikelfilter, beispielsweise bei einer Hochlastphase des Verbrennungsmotors oder bei einer Regeneration des Partikelfilters, möglich, eine effiziente Konvertierung der Stickoxide durch den zweiten SCR-Katalysator zu ermöglichen und eine thermische Zersetzung des aus dem Reduktionsmittel gewonnenen Ammoniaks zu vermeiden.

Besonders bevorzugt ist dabei, wenn das erste Dosierelement und das zweite Dosierelement aus einem gemeinsamen Reduktionsmittelbehälter mit Reduktionsmittel versorgt werden. Durch einen gemeinsamen Reduktionsmittelbehälter ist eine besonders einfache und kostengünstige Versorgung der beiden Dosierelemente mit dem Reduktionsmittel möglich.

In einer weiteren Ausführungsform der Erfindung ist vorgesehen, dass stromabwärts des ersten Dosierelements und stromaufwärts des Partikelfilters mit der Beschichtung zur selektiven katalytischen Reduktion von Stickoxiden ein Abgasmischer in dem Abgaskanal angeordnet ist. Durch einen Abgasmischer kann eine homogene Verteilung des Reduktionsmittels im Abgasstrom vor Eintritt in den Partikelfilter erreicht werden. Dabei kann durch den Abgasmischer die Länge der Mischstrecke verkürzt werden, um eine solche homogene Verteilung zu erreichen. Dadurch kann der Partikelfilter näher am Auslass des Verbrennungsmotors angeordnet werden, wodurch ein Aufheizen des Partikelfilters nach einem Kaltstart des Verbrennungsmotors oder zur Regeneration des Partikelfilters begünstigt wird.

Die verschiedenen in dieser Anmeldung genannten Ausführungsformen der Erfindung sind, sofern im Einzelfall nicht anders ausgeführt, miteinander kombinierbar.

Durch die in den abhängigen Ansprüchen aufgeführten Merkmale sind vorteilhafte Verbesserungen und nicht triviale Weiterentwicklungen des im unabhängigen Anspruch aufgeführten Verfahrens zur Abgasnachbehandlung des Verbrennungsmotors möglich.

Die Erfindung wird nachfolgend in Ausführungsbeispielen anhand der zugehörigen Zeichnungen erläutert. Gleiche Bauteile oder Bauteile mit gleicher Funktion sind dabei in den unterschiedlichen Figuren mit den gleichen Bezugsziffern gekennzeichnet. Es zeigen:
- Figur 1: einen Verbrennungsmotor mit einem erfindungsgemäßen Abgasnachbehandlungssystem gemäß einer Ausführungsform und
- Figur 2: einen Verbrennungsmotor mit einem erfindungsgemäßen Abgasnachbehandlungssystem in schematischer Darstellung.

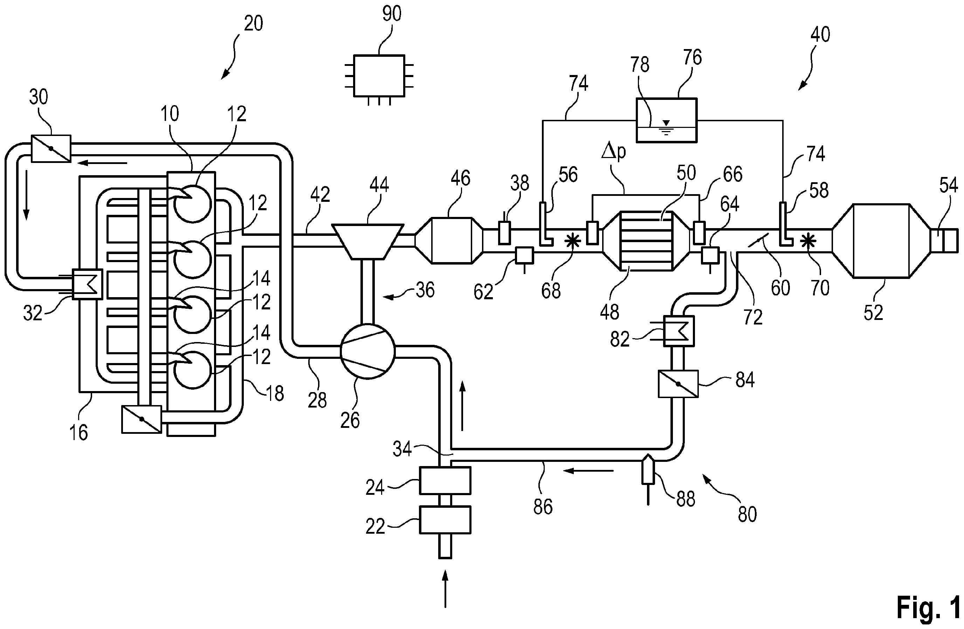

Figur 1 zeigt eine schematische Darstellung eines Verbrennungsmotors 10 mit einem Luftversorgungssystem 20 und einer Abgasanlage 40. Der Verbrennungsmotor 10 ist als ein direkteinspritzender Dieselmotor ausgeführt und weist mehrere Brennräume 12 auf. An den Brennräumen 12 ist jeweils ein Kraftstoffinjektor 14 zur Einspritzung eines Kraftstoffs in den jeweiligen Brennraum 12 angeordnet. Der Verbrennungsmotor 10 ist mit seinem Einlass (Einlasskrümmer) 16 mit dem Luftversorgungssystem 20 und mit seinem Auslass (Abgaskrümmer) 18 mit der Abgasanlage 40 verbunden. Der Verbrennungsmotor 10 umfasst ferner eine Niederdruck-Abgasrückführung 80, über welche ein Abgas des Verbrennungsmotors 10 stromab des Auslasses 18 zum Einlass 16 zurückgeführt werden kann. An den Brennräumen 12 des Verbrennungsmotors 10 sind Einlassventile und Auslassventile angeordnet, mit welchen eine fluidische Verbindung vom Luftversorgungssystem 20 zu den Brennräumen 12 oder von den Brennräumen 12 zur Abgasanlage 40 geöffnet oder verschlossen werden kann.

Das Luftversorgungssystem 20 umfasst einen Ansaugkanal 28, in welchem in Strömungsrichtung von Frischluft durch den Ansaugkanal 28 ein Luftfilter 22, stromabwärts des Luftfilters 22 ein Luftmassenmesser 24, insbesondere ein Heißfilmluftmassenmesser, stromabwärts des Luftmassenmessers 24 ein Verdichter 26 eines Abgasturboladers 36, stromabwärts des Verdichters 26 eine Drosselklappe 30 und weiter stromabwärts ein Ladeluftkühler 32 angeordnet sind. Dabei kann der Luftmassenmesser 24 auch in einem Filtergehäuse des Luftfilters 22 angeordnet sein, sodass der Luftfilter 22 und der Luftmassenmesser 24 eine Baugruppe ausbildet. Stromabwärts des Luftfilters 22 und stromaufwärts des Verdichters 26 ist eine Einmündung 34 vorgesehen, an welcher eine Abgasrückführungsleitung 86 der Niederdruck-Abgasrückführung 80 in den Ansaugkanal 28 mündet.

Die Abgasanlage 40 umfasst einen Abgaskanal 42, in welchem in Strömungsrichtung eines Abgases des Verbrennungsmotors 10 durch den Abgaskanal 42 eine Turbine 44 des Abgasturboladers 36 angeordnet ist, welche den Verdichter 26 im Luftversorgungssystem 20 über eine Welle antreibt. Der Abgasturbolader 36 ist vorzugsweise als Abgasturbolader 36 mit variabler Turbinengeometrie ausgeführt. Dazu sind einem Turbinenrad der Turbine 44 verstellbare Leitschaufeln vorgeschaltet, über welche die Anströmung des Abgases auf die Schaufeln der Turbine 44 variiert werden kann. Stromabwärts der Turbine 44 sind mehrere Abgasnachbehandlungskomponenten 46, 48, 50, 52, 54 vorgesehen. Dabei ist unmittelbar stromabwärts der Turbine 44 als erste Komponente der Abgasnachbehandlung ein Oxidationskatalysator 46, der als elektrisch beheizbarer Katalysator ausgebildet ist, angeordnet. Stromabwärts des Oxidationskatalysators 46 ist ein Partikelfilter 48 mit einer Beschichtung 50 zur selektiven katalytischen Reduktion von Stickoxiden (SCR-Beschichtung) angeordnet. Stromabwärts des Partikelfilters 48 ist vorzugsweise in Unterbodenlage eines Kraftfahrzeugs ein zweiter SCR-Katalysator 52 im Abgaskanal 42 angeordnet. Der zweite SCR-Katalysator 52 weist einen Ammoniak-Sperrkatalysator 54 auf. Stromabwärts des Oxidationskatalysators 46 und stromaufwärts des Partikelfilters 48 mit SCR-Beschichtung 50 ist ein erstes Dosierelement 56 zur Eindosierung eines Reduktionsmittels 78 in den Abgaskanal 42 vorgesehen. Stromabwärts des Partikelfilters 48 zweigt eine Abgasrückführungsleitung 86 einer Niederdruck-Abgasrückführung 80 an einer Verzweigung 72 aus dem Abgaskanal 42 ab. Stromabwärts der Verzweigung 72 und stromaufwärts des zweiten SCR-Katalysators 52 ist ein zweites Dosierelement 58 angeordnet, um das Reduktionsmittel 78 in den Abgaskanal 42 einzudosieren. Das erste Dosierelement 56 und das zweite Dosierelement 58 sind jeweils über eine Reduktionsmittelleitung 74 mit einem gemeinsamen Reduktionsmittelbehälter 76 verbunden, in welchem das Reduktionsmittel 78 bevorratet ist. Ferner umfasst die Abgasanlage 40 eine Abgasklappe 60, mit welcher die Abgasrückführung über die Niederdruck-Abgasrückführung 80 gesteuert werden kann.

Die Niederdruck-Abgasrückführung 80 umfasst neben der Abgasrückführungsleitung 86 einen Abgasrückführungskühler 82 und ein Abgasrückführungsventil 84, über welches die Abgasrückführung durch die Abgasrückführungsleitung 86 steuerbar ist. An der Abgasrückführungsleitung 86 der Abgasrückführung 80 ist ein Temperatursensor 88 vorgesehen, über welchen eine Abgastemperatur in der Abgasrückführung 80 ermittelt werden kann, um die Abgasrückführung 80 zu aktivieren, sobald die Abgastemperatur in der Abgasrückführung 80 einen definierten Schwellenwert überschritten hat. Somit kann verhindert werden, dass Wasserdampf oder im Abgas enthaltenes Reduktionsmittel zur selektiven katalytischen Reduktion von Stickoxiden, insbesondere flüssige Harnstofflösung, auskondensiert und in der Abgasrückführung 80 oder im Luftversorgungssystem 20 zu Beschädigungen oder Ablagerungen führt. Stromabwärts der Verzweigung und stromaufwärts des Abgasrückführungskühlers 82 kann ein Filter vorgesehen werden, um den Eintrag von Partikeln in die Abgasrückführung 80 zu minimieren. Der Abgasrückführungskanal 86 mündet an einer Einmündung 34 in die Ansaugleitung 28 des Luftversorgungssystems 20.

In der Abgasanlage 40 ist stromabwärts des Oxidationskatalysators 46 und stromaufwärts des ersten Dosierelements 56 ein erster NOx-Sensor 62 angeordnet. Stromabwärts des Partikelfilters 48 und stromaufwärts der Verzweigung 72 ist ein zweiter NOx-Sensor 64 angeordnet. Ferner weist der Partikelfilter 48 einen Differenzdrucksensor 66 auf, mit welchem eine Druckdifferenz Δp über den Partikelfilter 48 ermittelt wird. Auf diese Weise kann der Beladungszustand des Partikelfilters 52 ermittelt und bei Überschreiten eines definierten Beladungsniveaus eine Regeneration des Partikelfilters 52 eingeleitet werden. Ferner ist in der Abgasanlage 40 ein Temperatursensor 38 vorgesehen, um die Abgastemperatur zu ermitteln.

Stromabwärts des ersten Dosierelements 56 und stromaufwärts des Partikelfilters 48 kann ein erster Abgasmischer 68 vorgesehen sein, um eine Durchmischung von Abgasstrom des Verbrennungsmotors 10 und Reduktionsmittel 78 vor Eintritt in den Partikelfilter 48 mit der SCR-Beschichtung 50 zu verbessern und die Länge der Mischstrecke zu verkürzen. Stromabwärts des zweiten Dosierelements 58 und stromaufwärts des zweiten SCR-Katalysators 52 kann ein zweiter Abgasmischer 70 angeordnet sein, um die Vermischung von Abgasstrom und Reduktionsmittel 78 zu verbessern und das Verdampfen des Reduktionsmittels 78 im Abgaskanal 42 zu unterstützen.

Der Verbrennungsmotor 10 ist mit einem Motorsteuergerät 90 verbunden, welches über nicht dargestellte Signalleitungen mit den NOx-Sensoren 62, 64, dem Differenzdrucksensor 66, den Temperatursensoren 38, 88 sowie mit den Kraftstoffinjektoren 14 des Verbrennungsmotors 10 und den Dosierelementen 56, 58 verbunden ist.

Sobald nun am zweiten SCR-Katalysator 58 ein Ammoniakschlupf ermittelt wurde oder festgestellt wurde, dass ein Ammoniakschlupf droht, erfolgt ein Anpassen der Betriebsstrategie des Verbrennungsmotors 10, dahingehend, dass die Menge an NOx im Abgas des Verbrennungsmotors 10 erhöht wird. Das Anpassen der Betriebsstrategie des Verbrennungsmotors 10, erfolgt dadurch, dass die mittels des Abgasrückführungssystems 80 zum Verbrennungsmotor 10 zurückgeführte Menge an Abgas angepasst wird. Das Anpassen der Betriebsstrategie des Verbrennungsmotors 10 erfolgt dadurch, dass die Menge an Abgas, welche stromabwärts des ersten SCR-Katalysators oder Partikelfilters 48 mit einer Beschichtung 50 und stromaufwärts des zweiten SCR-Katalysators 58 abgezweigt wird, proportional zum Ammoniak Füllstand des zweiten SCR-Katalysators vermindert wird.

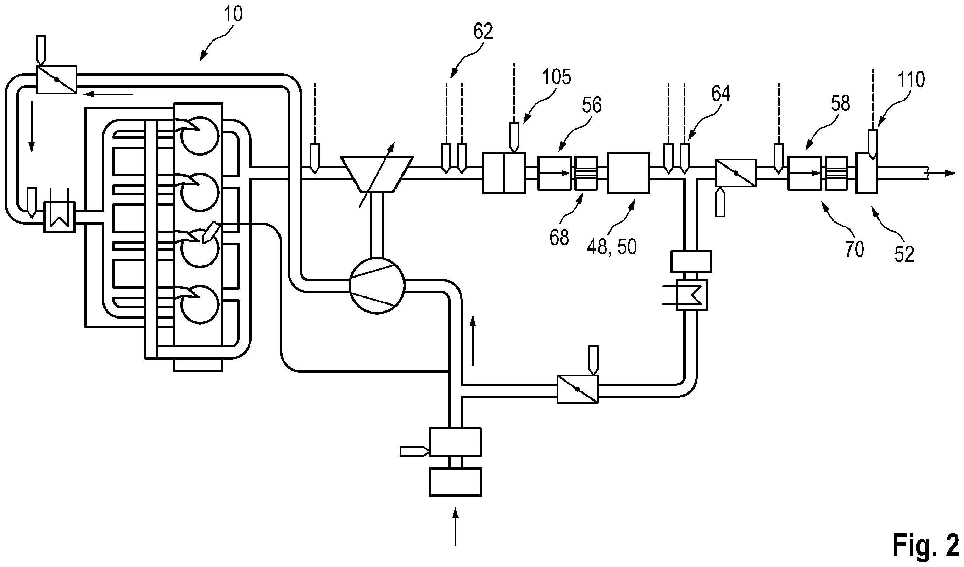

In Figur 2 ist ein Verbrennungsmotor mit einem erfindungsgemäßen Abgasnachbehandlungssystem gemäß einer zweiten Ausführungsform dargestellt. Im Vergleich zu der Darstellung gemäß Figur 1 ist die in Figur 2 gewählte Darstellung in ihrer Detailgenauigkeit reduzierter, und stellt auf die Anordnung des elektrisch beheizbaren Katalysators 105 innerhalb der Abgasnachbehandlungsanlage ab. Wie im Falle der Ausführungsform, die in Figur 1 gezeigt ist, weist das Abgasnachbehandlungssystem des Verbrennungsmotors 10 einen Partikelfilter 48 mit einer Beschichtung 50 zur selektiven katalytischen Reduktion von Stickoxiden auf. Stromaufwärts des Partikelfilters 48 ist ein erster NOx-Sensor 62 angeordnet, sowie ein erstes Dosierelement 56, mit welchem ein Reduktionsmittel 78 stromaufwärts des Partikelfilters 48 in den Abgaskanal eindosierbar ist. Stromabwärts des Dosierelementes ist ein Abgasmischer 68 angeordnet.

Ferner ist stromabwärts des Partikelfilters 48, 50 ein zweiter NOx-Sensor 64 angeordnet. Ferner ist stromabwärts des zweiten NOx-Sensors 64 ein zweiter SCR-Katalysator 52 angeordnet und stromabwärts des zweiten SCR Katalysators 52 ist ein dritter NOx-Sensor 110 angeordnet. Stromabwärts zum zweiten NOx-Sensor 64 ist ein zweites Dosierelement 58 angeordnet und ein zweiter Abgasmischer 70. Stromabwärts des ersten NOx-Sensors 62 ist der elektrisch beheizbare Katalysator 105 angeordnet, der im vorliegenden Falle einen Oxidationskatalysator umfasst. Dieser elektrisch beheizbare Katalysator wird auch als EHC bezeichnet. Es erfolgt eine Messung einer ersten NOx-Konzentration NOx_1 stromaufwärts des Partikelfilters 48, 50 mittels dem ersten NOx-Sensor 62. Es erfolgt zudem eine Messung einer zweiten NOx-Konzentration NOx_2 stromabwärts des Partikelfilters 48, 50 mittels dem zweiten NOx-Sensor 64. Es erfolgt optional ein Messen einer dritten NOx-Konzentration NOx_3 stromabwärts des zweiten SCR Katalysators 52 mittels dem dritten NOx-Sensor 110.

Das erfindungsgemäße Verfahren zur Aufheizung des elektrisch beheizbaren Katalysators 105 erfolgt nun durch elektrisches Aufheizen des elektrisch beheizbaren Katalysators, bei gleichzeitiger Drehzahlerhöhung des Verbrennungsmotors im Leerlauf.

Insbesondere hat sich die Kombination einer Leistung von wenigstens 6 kW zur Aufheizung des EHCs und eine Drehzahlerhöhung auf 1200 bis 1500 Umdrehungen pro Minute (min⁻¹), als bevorzugt gezeigt. Diese Zahlenwerte stellen eine ganz besonders bevorzugte Kombination dar, da hierdurch einerseits besonders ausbalancierter Weise die Abgasemissionen vor Aufheizen des Katalysators im Leerlauf gering gehalten werden können, allerdings gleichzeitig ein ausreichendes Aufheizen des Abgasnachbehandlungssystems dahingehend erfolgt, dass nach Fahrtbeginn die Abgasemissionen wirksam durch die Abgasnachbehandlungsanlage reduziert werden.

Die vorliegende Erfindung ist nicht auf Dieselverbrennungsmotoren beschränkt, sondern kann auch bei Ottoverbrennungsmotoren Anwendung finden.

### Bezugszeichenliste

- 10: Verbrennungsmotor
- 12: Brennraum
- 14: Kraftstoffinjektor
- 16: Einlass
- 18: Auslass

- 20: Luftversorgungsystem
- 22: Luftfilter
- 24: Luftmassenmesser
- 26: Verdichter
- 28: Ansaugkanal

- 30: Drosselklappe
- 32: Ladeluftkühler
- 34: Einmündung
- 36: Abgasturbolader
- 38: Temperatursensor

- 40: Abgasanlage
- 42: Abgaskanal
- 44: Turbine
- 46: Oxidationskatalysator (elektrisch beheizbar)
- 48: Partikelfilter

- 50: Beschichtung zur selektiven katalytischen Reduktion von Stickoxiden
- 52: zweiter SCR-Katalysator
- 54: Ammoniak-Sperrkatalysator
- 56: erstes Dosierelement
- 58: zweites Dosierelement

- 60: Abgasklappe
- 62: erster NOx-Sensor
- 64: zweiter NOx-Sensor
- 66: Differenzdrucksensor
- 68: erster Abgasmischer

- 70: zweiter Abgasmischer
- 72: Verzweigung
- 74: Reduktionsmittelleitung
- 76: Reduktionsmittelbehälter
- 78: Reduktionsmittel

- 80: Niederdruck-Abgasrückführung
- 82: Abgasrückführungskühler
- 84: Abgasrückführungsventil
- 86: Abgasrückführungsleitung
- 88: Temperatursensor

- 90: Motorsteuergerät

- 105: elektrisch beheizbarer Katalysator / Oxidationskatalysator
- 110: Dritter NOx-Sensor

## Patentansprüche

1. Verfahren zur Aufheizung eines elektrisch beheizbaren Katalysators (46, 105) zur Abgasnachbehandlung eines Verbrennungsmotors (10), der mit seinem Auslass (18) mit einer Abgasanlage (40) verbunden ist, wobei der elektrisch beheizbare Katalysator (46, 105) in der Abgasanlage (40) angeordnet ist, wobei das Verfahren die folgenden Schritte umfasst:
elektrisches Aufheizen des elektrisch beheizbaren Katalysators (46, 105) und
Drehzahlerhöhung des Verbrennungsmotors (10) auf wenigstens 1000 min⁻¹,
wobei:
die Schritte des Verfahrens bei Leerlauf des Verbrennungsmotors (10) durchgeführt werden;
während der Verfahrensschritte eine Abfahrtbeschränkung eines durch den Verbrennungsmotor (10) angetriebenen Kraftfahrzeugs aktiviert ist; und
die Abfahrtsbeschränkung dem Fahrer optisch angezeigt wird.

2. Verfahren gemäß Anspruch 1, wobei das Aufheizen des elektrisch beheizbaren Katalysators (46, 105) mit einer Leistung von wenigstens 4 kW erfolgt.

3. Verfahren gemäß Anspruch 2, wobei das Aufheizen des elektrisch beheizbaren Katalysators (46, 105) mit einer Leistung von wenigstens 6 kW erfolgt.

4. Verfahren gemäß einem der vorhergehenden Ansprüche, wobei die Drehzahlerhöhung auf wenigstens 1200 min⁻¹ stattfindet.

5. Verfahren gemäß Anspruch 4, wobei die Drehzahlerhöhung auf maximal 1500 min⁻¹ stattfindet.

6. Kraftfahrzeug mit einem Verbrennungsmotor (10), der mit seinem Auslass (18) mit einer Abgasanlage (40) verbunden ist, wobei in der Abgasanlage (40) ein elektrisch beheizbarer Katalysator (46, 105) angeordnet ist, wobei das Kraftfahrzeug dazu ausgebildet ist, das Verfahren gemäß einem der vorhergehenden Ansprüche auszuführen.

## Claims

1. Method for heating an electrically heatable catalytic converter (46, 105) for exhaust-gas aftertreatment in an internal combustion engine (10) which is connected by way of its outlet (18) to an exhaust-gas system (40), wherein the electrically heatable catalytic converter (46, 105) is arranged in the exhaust-gas system (40), wherein the method comprises the following steps:
electrically heating the electrically heatable catalytic converter (46, 105) and increasing the rotation speed of the internal combustion engine (10) to at least 1000 rpm,
wherein:
the steps of the method are carried out during idling of the internal combustion engine (10);
during the method steps drive-away restriction for a motor vehicle driven by the internal combustion engine (10) is activated; and
the drive-away restriction is visually displayed to the driver.

2. Method according to Claim 1, wherein the electrically heatable catalytic converter (46, 105) is heated with a power of at least 4 kW.

3. Method according to Claim 2, wherein the electrically heatable catalytic converter (46, 105) is heated with a power of at least 6 kW.

4. Method according to any of the preceding claims, wherein the rotation speed is increased to at least 1200 rpm.

5. Method according to Claim 4, wherein the rotation speed is increased to at most 1500 rpm.

6. Motor vehicle comprising an internal combustion engine (10) which is connected by way of its outlet (18) to an exhaust gas system (40), wherein an electrically heatable catalytic converter (46, 105) is arranged in the exhaust gas system (40), wherein the motor vehicle is designed to execute the method according to any of the preceding claims.

## Revendications

1. Procédé de chauffage d'un catalyseur chauffable électriquement (46, 105) destiné au post-traitement de gaz d'échappement d'un moteur à combustion interne (10), qui est relié par sa sortie (18) à un système d'échappement (40), le catalyseur chauffable électriquement (46, 105) étant disposé dans le système d'échappement (40), le procédé comprenant les étapes suivantes :
chauffer électriquement le catalyseur chauffable électriquement (46, 105) et augmenter la vitesse de rotation du moteur à combustion interne (10) jusqu'à au moins 1000 tr/min⁻¹,
les étapes du procédé étant réalisées lorsque le moteur à combustion interne (10) tourne au ralenti ;
au cours des étapes du procédé, une restriction de démarrage d'un véhicule automobile entraîné par le moteur à combustion interne (10) étant activée ; et
la restriction de démarrage étant indiquée au conducteur par des moyens optiques.

2. Procédé selon la revendication 1, le catalyseur chauffable électriquement (46, 105) étant chauffé avec une puissance d'au moins 4 kW.

3. Procédé selon la revendication 2, le catalyseur chauffable électriquement (46, 105) étant chauffé avec une puissance d'au moins 6 kW.

4. Procédé selon l'une des revendications précédentes, la vitesse de rotation augmentant jusqu'à au moins 1200 tr/min⁻¹.

5. Procédé selon la revendication 4, la vitesse de rotation augmentant jusqu'à un maximum de 1500 tr/min⁻¹.

6. Véhicule automobile comprenant un moteur à combustion interne (10) dont la sortie (18) est reliée à un système d'échappement (40), un catalyseur chauffable électriquement (46, 105) étant disposé dans le système d'échappement (40), le véhicule automobile étant conçu pour mettre en œuvre le procédé selon l'une des revendications précédentes.
